(19) Europäisches Patentamt
European Patent Office
Office européen des brevets

(11) **EP 3 843 327 A1**

(12) **DEMANDE DE BREVET EUROPEEN**

(43) Date de publication:
**30.06.2021  Bulletin 2021/26**

(51) Int Cl.:
***H04L 9/32*** (2006.01)

(21) Numéro de dépôt: **20217196.3**

(22) Date de dépôt: **24.12.2020**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME
KH MA MD TN**

(30) Priorité: **26.12.2019  FR 1915630**

(71) Demandeur: **THALES
92400 Courbevoie (FR)**

(72) Inventeurs:
• **GARRIDO, Eric
92230 GENEVILLIERS (FR)**
• **MARTINELLI, Ange
92230 GENEVILLIERS (FR)**
• **LEFRANC, David
92230 GENEVILLIERS (FR)**

(74) Mandataire: **Lavoix
2, place d'Estienne d'Orves
75441 Paris Cedex 09 (FR)**

(54) **PROCÉDÉ DE CODAGE D'UN MOTIF D'INTÉGRITÉ CRYPTOGRAPHIQUE DE FAIBLE TAILLE ET DISPOSITIFS ASSOCIÉS**

(57)    L'invention concerne un procédé de codage d'un motif d'intégrité cryptographique de taille inférieure ou égale à 64 bits, le procédé de codage comprenant une étape de :
- fourniture d'une première constante, d'une deuxième constante et d'un message,
- chiffrement de la première constante, pour obtenir un premier paramètre,
- application d'une fonction de hachage paramétrée par le premier paramètre sur une donnée obtenue à partir du message, la fonction de hachage étant une fonction dans un corps fini,
- chiffrement de la deuxième constante, pour obtenir un deuxième paramètre,
- mise en œuvre d'un traitement non linéaire comportant l'application d'une fonction non-linéaire sur le deuxième paramètre et le résultat du hachage, pour obtenir une sortie, et
- obtention du motif d'intégrité cryptographique en fonction du résultat de la sortie.

FIG.2

EP 3 843 327 A1

**Description**

DOMAINE DE L'INVENTION

La présente invention concerne un procédé de codage d'un motif d'intégrité cryptographique de faible taille. La présente invention porte aussi sur un procédé de codage d'un message. La présente invention se rapporte aussi à un produit programme d'ordinateur et à un support lisible d'informations impliqués dans la mise en œuvre des procédés de codage précédents.

ARRIERE-PLAN DE L'INVENTION

L'Internet des objets est souvent dénommé sous l'acronyme IoT renvoyant à la dénomination anglaise de « Internet of Things ». L'Internet des objets désigne l'interconnexion entre le réseau Internet et des objets, des lieux et des environnements physiques. Plus précisément, selon l'Unité Internationale des Télécommunications, l'Internet des Objets est défini comme « une infrastructure mondiale pour la société de l'information, qui permet de disposer de services évolués en interconnectant des objets (physique ou virtuels) grâce aux technologies de l'information et de la communication interopérables existantes ou en évolution ». Du fait d'une telle interconnexion, de nouveaux services peuvent émerger.

Pour développer de tels services, il est souhaitable de disposer de télécommunications efficaces dans un contexte de faible bande passante. Une telle efficacité suppose le respect de deux exigences contradictoires : d'un côté que les messages soient les plus courts possibles dans un protocole de communication standard mais d'un autre côté de garantir un bon niveau de sécurité du fait de la sensibilité de certains échanges dans l'Internet des objets.

Autrement dit, il est souhaitable de disposer d'un protocole de communication impliquant des motifs d'intégrité cryptographiques (aussi appelé tag d'intégrité cryptographique) courts insérés dans les messages et présentant une bonne sécurité. A titre d'exemple, le motif d'intégrité est un code de message d'authentification (ou MAC) ou un contrôle de redondance cyclique (ou CRC).

Dans un tel contexte, par définition, un motif d'intégrité cryptographique est court lorsque la taille du motif d'intégrité cryptographique présentant une taille inférieure ou égale à 64 bits.

Aucun procédé cryptographique connu ne permet de fournir un niveau de sécurité satisfaisant lorsque le motif d'intégrité cryptographique est court.

RESUME DE L'INVENTION

Il existe donc un besoin pour un procédé de codage d'un motif d'intégrité cryptographique présentant une taille inférieure ou égale à 64 bits garantissant une meilleure sécurité.

A cet effet, la description porte sur un procédé de codage d'un motif d'intégrité cryptographique de taille inférieure ou égale à 64 bits, le procédé de codage comprenant une étape de fourniture d'une première constante, d'une deuxième constante distincte de la première constante et d'un message, une étape de chiffrement de la première constante à l'aide d'une première clé de chiffrement, pour obtenir un premier paramètre, une étape d'application d'une fonction de hachage paramétrée par le premier paramètre sur une donnée obtenue à partir du message, la fonction de hachage étant une fonction dans un corps fini, pour obtenir un résultat du hachage, une étape de chiffrement de la deuxième constante à l'aide d'une deuxième clé de chiffrement, pour obtenir un deuxième paramètre, une étape de mise en oeuvre d'un traitement non linéaire comportant l'application d'une fonction non-linéaire sur le deuxième paramètre et le résultat du hachage, pour obtenir une sortie, et une étape d'obtention du motif d'intégrité cryptographique en fonction du résultat de la sortie.

De manière très résumé, les CRC s'adaptent à toutes les tailles petite ou grande, mais n'apportent pas de sécurité cryptographiques (ils ne dépendent pas d'une clé secrète). Les MAC cryptographiques des standards comme HMAC sont difficiles à mettre en oeuvre (ils sont par exemple basés sur des fonctions de hachage cryptographique dont l'état interne est grand). Le mode GCM offre un service d'intégrité avec un fonctionnement performant et flexible en terme de latence/débit/ressource de calcul) mais sa sécurité s'écroule pour les taille de MAC faible. Le présent procédé de codage apporte donc une solution de « CRC cryptographique », c'est-à-dire avec un fonctionnement à mettre en oeuvre comme un CRC standard, tout en présentant un bon niveau de sécurité.

Plus précisément, pour proposer un tel procédé de codage bien adapté au cas d'usage de l'internet des objets, les inventeurs ont sélectionné parmi les procédés connus un procédé ne fonctionnant pas lorsque la taille du motif d'intégrité cryptographique diminue et ont ensuite étudié comment modifié de manière simple un tel procédé pour obtenir l'effet voulu.

Le procédé GCM est un des procédés cryptographiques les plus utilisés pour protéger des données en intégrité et confidentialité. L'abréviation GCM renvoie à la dénomination anglaise de « Galois/Counter Mode » qui signifie littéralement « mode de comptage/Gallois ». Un tel procédé utilise un compteur ainsi que des opérations effectuées (notamment la multiplication) à partir du compteur et des clés de chiffrement dans un corps fini ou corps de Galois. Par définition, un corps fini est un corps commutatif qui est par ailleurs fini. Un corps commutatif est un anneau commutatif dans lequel l'ensemble des éléments non nuls est un groupe commutatif pour la multiplication.

Lorsque seule l'authentification est recherchée, il est connu d'utiliser une version plus limitée du procédé GCM reposant sur des calculs similaires. Une telle version correspond à un procédé d'authentification généralement appelé protocole ou procédé GMAC. L'abréviation GMAC renvoie à la dénomination de « Galois Message Authentification Code » qui signifie littéralement « code de message d'authentification de Galois ».

Le procédé GMAC permet de calculer un tag d'intégrité positionné en avant du message à authentifier. Un tel tag d'intégrité est souvent dénommé code de message d'authentification ou MAC.

Les deux procédés précédents GMC et GMAC sont notamment décrits dans un article de Morris Dworkin intitulé « Recommendation for Block Cipher Modes of Opération : Galois/counter Mode (GCM) and GMAC » et extrait de NIST Spécial Publication 800-38D (novembre 2017).

Le procédé GMAC garantit une très bonne sécurité.

Toutefois, le niveau de sécurité s'effondre lorsque la taille du MAC diminue. Il en résulte qu'une telle sécurité n'est obtenue que lorsque la taille du MAC est suffisamment grande, à savoir strictement supérieur à 80 bits. Typiquement, la taille du MAC est égale à 128 bits.

Les inventeurs ont donc cherché à modifier le protocole GMAC pour que le nouveau protocole obtenu puisse garantir un bon niveau de sécurité pour des motifs d'intégrité cryptographique de faible taille.

Une telle recherche a conduit les inventeurs à trouver une opération spécifique permettant, en outre, de conserver un protocole compatible avec le protocole GMAC et restant aisé à calculer. Cela permet que le protocole modifié soit utilisable dans les infrastructures existantes de télécommunication.

Selon des modes de réalisation particuliers, le procédé de codage d'un motif d'intégrité cryptographique présente une ou plusieurs des caractéristiques suivantes prises selon toute combinaison techniquement admissible :

- le corps fini est un corps de Galois à $2^n$ membres avec n un entier supérieur ou égal à 6.
- la fonction non-linéaire f vérifie :
  pour tout $(a, b) \in GF(2^n)$ a, $b \neq 0$, $\#\{x, f(x) + f(x + a) = b\} \leq \delta$
  avec # désignant le cardinal, $GF(2^n)$ le corps de Galois à $2^n$ membres et $\delta$ un nombre.
- le nombre $\delta$ est inférieur ou égal à 6.
- l'étape de mise en œuvre comporte la multiplication du résultat de la fonction non-linéaire par un nombre aléatoire.
- la fonction non-linéaire est une permutation puissance sur le corps fini.
- la fonction non-linéaire est la fonction inverse ou la fonction qui à x associe $x^7$.
- la fonction non-linéaire est une fonction vectorielle courbe.
- à l'étape d'obtention, il est appliqué une fonction impliquant une troncature, la fonction étant appliquée sur la sortie et une clé à usage unique.

Selon un autre aspect, la description concerne aussi un produit programme d'ordinateur un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'étapes d'un procédé tel que précédemment décrit lorsque le programme d'ordinateur est mis en œuvre sur l'unité de traitement des données.

La description décrit aussi un support lisible d'informations comportant des instructions de programme formant un programme d'ordinateur, le programme d'ordinateur étant chargeable sur une unité de traitement de données et adapté pour entraîner la mise en œuvre d'étapes d'un procédé tel que précédemment décrit lorsque le programme d'ordinateur est mis en œuvre sur l'unité de traitement de données.

BREVE DESCRIPTION DES FIGURES

L'invention sera mieux comprise et d'autres avantages de celle-ci apparaîtront plus clairement à la lumière de la description qui va suivre, donnée uniquement à titre d'exemple et faite en référence aux dessins annexés, dans lesquels :

- la figure 1 est une représentation schématique d'un système et d'un produit programme d'ordinateur,
- la figure 2 est un exemple d'ordinogramme d'un exemple de mise en œuvre d'un procédé de codage d'un motif d'intégrité mis en œuvre par le système de la figure 1, et
- la figure 3 est un exemple d'ordinogramme d'un autre exemple de mise en œuvre d'un procédé de codage d'un motif d'intégrité mis en œuvre par le système de la figure 1.

DESCRIPTION DETAILLEE DE MODES DE REALISATION DE L'INVENTION

L'interaction entre le système 10 et le produit programme d'ordinateur 12 permet la mise en œuvre d'un procédé de codage d'un motif d'intégrité cryptographique. Le procédé de codage d'un motif d'intégrité est ainsi un procédé mis en œuvre par ordinateur.

Le système 10 est un ordinateur de bureau. En variante, le système 10 est un ordinateur monté sur un rack, un ordinateur portable, une tablette, un assistant numérique personnel (PDA) ou un smartphone.

Dans des modes de réalisation spécifiques, l'ordinateur est adapté pour fonctionner en temps réel et/ou est dans un système embarqué, notamment dans un véhicule tel qu'un avion.

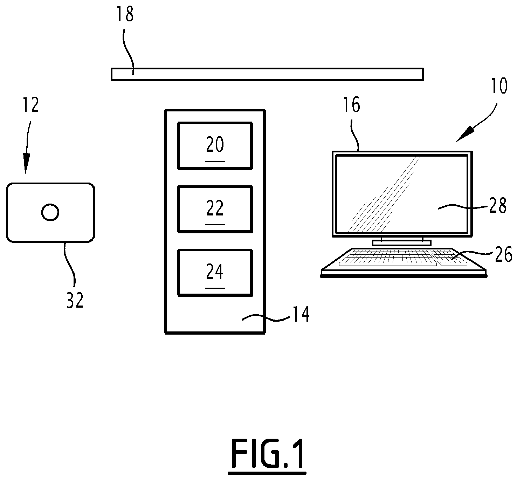

Dans le cas de la figure 1, le système 10 comprend un calculateur 14, une interface utilisateur 16 et un dispositif de communication 18.

Le calculateur 14 est un circuit électronique conçu pour manipuler et/ou transformer des données représentées par des quantités électroniques ou physiques dans des registres du système 10 et/ou des mémoires en d'autres données similaires correspondant à des données physiques dans les mémoires de registres ou d'autres types de dispositifs d'affichage, de dispositifs de transmission ou de dispositifs de mémorisation.

En tant qu'exemples spécifiques, le calculateur 14 comprend un processeur monocœur ou multicœurs (tel qu'une unité de traitement centrale (CPU), une unité de traitement graphique (GPU), un microcontrôleur et un processeur de signal numérique (DSP)), un circuit logique programmable (comme un circuit intégré spécifique à une application (ASIC), un réseau de portes programmables *in situ* (FPGA), un dispositif logique programmable (PLD) et des réseaux logiques programmables (PLA)), une machine à états, une porte logique et des composants matériels discrets.

Le calculateur 14 comprend une unité de traitement de données 20 adaptée pour traiter des données, notamment en effectuant des calculs, des mémoires 22 adaptées à stocker des données et un lecteur 24 adapté à lire un support lisible par ordinateur.

L'interface utilisateur 16 comprend un dispositif d'entrée 26 et un dispositif de sortie 28.

Le dispositif d'entrée 26 est un dispositif permettant à l'utilisateur du système 10 de saisir sur le système 10 des informations ou des commandes.

Sur la figure 1, le dispositif d'entrée 26 est un clavier. En variante, le dispositif d'entrée 26 est un périphérique de pointage (tel qu'une souris, un pavé tactile et une tablette graphique), un dispositif de reconnaissance vocale, un oculomètre ou un dispositif haptique (analyse des mouvements de mouvement).

Le dispositif de sortie 28 est une interface utilisateur graphique, c'est-à-dire une unité d'affichage conçue pour fournir des informations à l'utilisateur du système 10.

Sur la figure 1, le dispositif de sortie 28 est un écran d'affichage permettant une présentation visuelle de la sortie. Dans d'autres modes de réalisation, le dispositif de sortie est une imprimante, une unité d'affichage augmenté et/ou virtuel, un haut-parleur ou un autre dispositif générateur de son pour présenter la sortie sous forme sonore, une unité produisant des vibrations et/ou des odeurs ou une unité adaptée à produire un signal électrique.

Dans un mode de réalisation spécifique, le dispositif d'entrée 26 et le dispositif de sortie 28 sont le même composant formant des interfaces homme-machine, tel qu'un écran interactif.

Le dispositif de communication 18 permet une communication unidirectionnelle ou bidirectionnelle entre les composants du système 10. Par exemple, le dispositif de communication 28 est un système de communication par bus ou une interface d'entrée / sortie.

La présence du dispositif de communication 18 permet que, dans certains modes de réalisation, les composants du calculateur 14 soient distants les uns des autres.

Le produit programme informatique 12 comprend un support lisible par ordinateur 32.

Le support lisible par ordinateur 32 est un dispositif tangible lisible par le lecteur 24 de la calculatrice 14.

Notamment, le support lisible par ordinateur 32 n'est pas un signal transitoire en soi, tels que des ondes radio ou d'autres ondes électromagnétiques à propagation libre, telles que des impulsions lumineuses ou des signaux électroniques.

Un tel support de stockage lisible par ordinateur 32 est, par exemple, un dispositif de stockage électronique, un dispositif de stockage magnétique, un dispositif de stockage optique, un dispositif de stockage électromagnétique, un dispositif de stockage à semi-conducteur ou toute combinaison de ceux-ci.

En tant que liste non exhaustive d'exemples plus spécifiques, le support de stockage lisible par ordinateur 32 est un dispositif codé mécaniquement, tel que des cartes perforées ou des structures en relief dans une gorge, une disquette, un disque dur, une mémoire morte (ROM), une mémoire vive (RAM), une mémoire effaçable programmable en lecture seule (EROM), une mémoire effaçable électriquement et lisible (EEPROM), un disque magnéto-optique, une mémoire vive statique (SRAM), un disque compact (CD-ROM), un disque numérique polyvalent (DVD), une clé USB, un disque souple, une mémoire flash, un disque à semi-conducteur (SSD) ou une carte PC telle qu'une carte mémoire PCMCIA.

Un programme d'ordinateur est stocké sur le support de stockage lisible par ordinateur 32. Le programme d'ordinateur comprend une ou plusieurs séquences d'instructions de programme mémorisées.

De telles instructions de programme, lorsqu'elles sont exécutées par l'unité de traitement de données 20, entraînent l'exécution d'étapes du procédé d'analyse.

Par exemple, la forme des instructions de programme est une forme de code source, une forme exécutable par ordinateur ou toute forme intermédiaire entre un code source et une forme exécutable par ordinateur, telle que la forme résultant de la conversion du code source via un interpréteur, un assembleur, un compilateur, un éditeur de liens ou un localisateur. En variante, les instructions de programme sont un microcode, des instructions firmware, des données de définition d'état, des données de configuration pour circuit intégré (par exemple du VHDL) ou un code objet.

Les instructions de programme sont écrites dans n'importe quelle combinaison d'un ou de plusieurs langages, par exemple un langage de programmation orienté objet (FORTRAN, C++, JAVA, HTML), un langage de programmation procédural (langage C par exemple).

Alternativement, les instructions du programme sont téléchargées depuis une source externe via un réseau, comme c'est notamment le cas pour les applications. Dans ce cas, le produit programme d'ordinateur comprend un support de données lisible par ordinateur sur lequel sont stockées les instructions de programme ou un signal de support de données sur lequel sont codées les instructions de programme.

Dans chaque cas, le produit programme d'ordinateur 12 comprend des instructions qui peuvent être chargées dans l'unité de traitement de données 20 et adaptées pour provoquer l'exécution du procédé d'analyse lorsqu'elles sont exécutées par l'unité de traitement de données 20. Selon les modes de réalisation, l'exécution est entièrement ou partiellement réalisée soit sur le système 10, c'est-à-dire un ordinateur unique, soit dans un système distribué entre plusieurs ordinateurs (notamment via l'utilisation de l'informatique en nuage).

Le fonctionnement du système 10 est maintenant décrit en référence à un exemple de mise en œuvre d'un procédé de codage d'un motif d'intégrité.

Il est supposé qu'une clé de chiffrement K a été échangée entre l'émetteur et le destinataire. De la clé de chiffrement K, sont dérivées deux sous-clés : une première sous-clé notée $H_1$ et une deuxième sous-clé $H_2$.

Par ailleurs, pour les notations mathématiques utilisées dans ce qui suit, le lecteur est invité à se reporter à la partie LEXIQUE.

Le procédé comporte une étape de fourniture, une étape de détermination, une étape de calcul, une étape de préparation, une première étape de chiffrement, une étape d'application d'une fonction de hachage, une deuxième étape de chiffrement, une étape de mise en œuvre d'un traitement non linéaire et une étape d'obtention.

Selon l'exemple décrit, lors de l'étape de fourniture, il est fourni un vecteur initial IV, un texte clair P (formant le message à transmettre), une donnée additionnelle A, une première constante C1 et une deuxième constante C2.

Le vecteur initial IV est un nombre dont est dérivé un nonce (nombre à usage unique) noté $J_0$.

La première constante C1 et la deuxième constante C2 sont distinctes.

Selon l'exemple proposé, la première constante C1 est $0^{128}$ et la deuxième constante C2 est $1^{128}$.

La première sous-clé H1 est dérivée de la clé de chiffrement K par une opération de chiffrement de sorte que H1 = CIPH(C1).

Similairement la deuxième sous-clé H2 est dérivée de la clé de chiffrement K par une opération de chiffrement de sorte que H2 = CIPH(C2).

La donnée additionnelle A désigne une donnée incluse dans un message m sur lequel porte le mécanisme d'intégrité, mais qui n'est pas chiffrée. Le message m est défini ultérieurement.

Il est à noter que, dans certains cas, la donnée additionnelle A est nulle

Lors de l'étape de détermination, il est déterminé le nonce à usage unique $J_0$.

Pour la suite, dans un souci de simplification du propos, il est à noter que la notation « sous-clé à usage unique r » pourra également être utilisée, r étant égal à CIPH($J_0$).

Selon l'exemple, le nonce $J_0$ est calculé ainsi selon deux alternatives distinctes déterminées sur une condition sur la longueur du vecteur initial IV.

La première alternative correspond au cas où $len(IV)$ = 96 tandis que la deuxième alternative correspond au cas $len(IV) \neq 96$.

Selon la première alternative, la clé à usage unique $J_O$ est calculée selon la formule suivante :

$$J_0 = IV \parallel 0^{31} \parallel 1$$

Selon la deuxième alternative, il est posé une première valeur s définie ainsi :

$$s = 128. \left\lceil \frac{len(IV)}{128} \right\rceil - len(IV)$$

La clé à usage unique $J_O$ est alors calculée selon la formule suivante :

$$J_0 = GHASH_K(IV \parallel 0^s)$$

Lors de l'étape de calcul, il est déterminé un texte chiffré noté C. Le texte chiffré C est parfois appelé cryptogramme.

Selon l'exemple décrit, le texte chiffré C est calculé selon la formule suivante :

$$C = GCTR_k(inc_{32}(J_0), P)$$

avec P qui désigne le texte clair.

Lors de l'étape de préparation, il est préparé un message noté m.

Pour cela, il est posé deux grandeurs u et v, la première grandeur u est définie ainsi :

$$u = 128.\left\lceil\frac{len(C)}{128}\right\rceil - len(C)$$

Quant à la deuxième grandeur v, par définition, cette deuxième grandeur v est calculée selon la formule suivante :

$$v = 128.\left\lceil\frac{len(A)}{128}\right\rceil - len(A)$$

Les deux grandeurs u et v permettent d'obtenir le message de calcul m selon la formule suivante :

$$m = A \parallel 0^v \parallel C \parallel 0^u \parallel [len(A)]_{64} \parallel [len(C)]_{64}$$

Le message m sur lequel porte l'intégrité est composé de l mots $m_0, m_1, ..., m_{l-1}$ de n bits avec l et n deux entiers.

Ainsi, le message de calcul m peut être considéré comme le polynôme $m(X)$ à coefficient sur $GF(2^n)$ qui s'écrit :

$$m(X) = m_0 + m_1 X + m_2 X^2 + \cdots + m_{l-1} X^{l-1}$$

La notation GF(x) désigne le corps fini de cardinal x, GF renvoyant à la dénomination anglaise de Galois Field qui signifie littéralement « Champ de Galois ».

Lors de la première étape de chiffrement, il est également calculé une première sous-clé, notée $\theta_1$, selon la formule :

$$\theta_1 = H_1 = CIPH(C1)$$

Il est à noter que la première sous-clé $\theta_1$ est considéreé comme un élément du corps fini $GF(2^n)$.

Lors de l'étape d'application, il est appliqué une fonction de hachage h paramétrée par la première sous-clé $\theta_1$ pour obtenir un résultat de hachage noté $S_{int}$.

Il vient ainsi :

$$S_{int} = h_{\theta_1}(m) = \theta_1 m(\theta_1) = \sum_{i=0}^{l-1} m_i \theta_1^{i+1}$$

De manière alternative, selon les notations du document de référence, cela correspond également à :

$$S_{int} = GHASH_{\theta_1}(A \parallel 0^v \parallel C \parallel 0^u \parallel [len(A)]_{64} \parallel [len(C)]_{64})$$

Il est à noter que la fonction de hachage sous-jacente $GHASH_{\theta_1} = h_{\theta_1}$ est, linéaire.

Lors de la deuxième étape de chiffrement, il est calculé une deuxième sous-clé $\theta_2$ selon la formule :

$$\theta_2 = H_2 = CIPH(C2)$$

L'étape de traitement non linéaire est ensuite mise en œuvre.

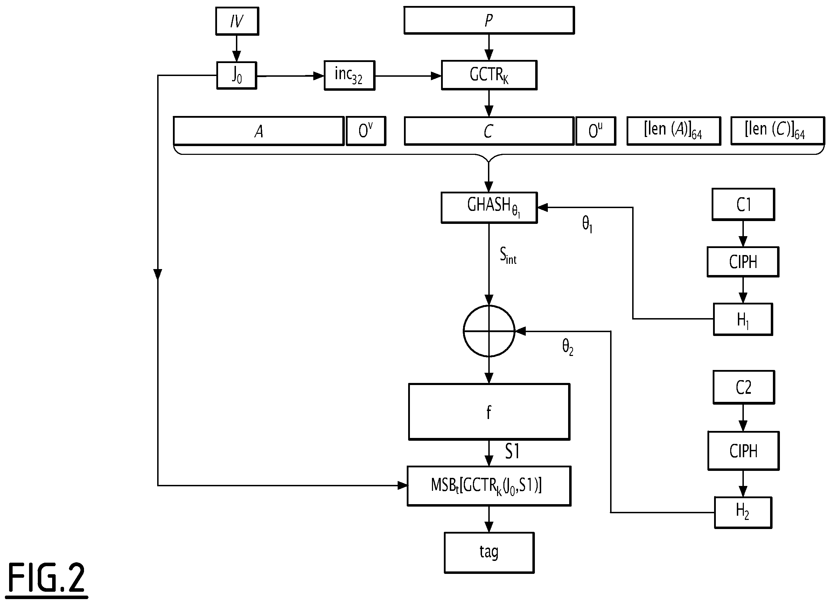

Dans l'exemple de la figure 2, lors de l'étape de traitement non linéaire, il est appliqué une fonction non-linéaire f sur le résultat du hachage $S_{int}$ et le deuxième paramètre $\theta_2$ pour obtenir une sortie S1 selon la formule suivante :

$$S1 = f(\theta_2 + S_{int})$$

Où l'opération « + » désigne l'addition sur $GF(2^n)$ c'est-à-dire le XOR bit à bit.

La fonction f une fonction sur $GF(2^n)$ non linéaire vérifiant la propriété différentielle suivante :

Pour tout $(a, b) \in CF(2^n)$ $a, b \neq 0$, $\#\{x, f(x) + f(x + a) = b\} \leq \delta$

Où la borne $\delta$ est un nombre.

Par exemple, la fonction non-linéaire f est une permutation puissance sur $GF(2^n)$.

A titre de cas particulier, la fonction non-linéaire f est la fonction inverse sur $GF(2^n)$. Une telle fonction s'écrit mathématiquement comme !

$$f(x) = x^{2^n - 2}$$

Dans ce cas, $\delta = 4$.

Selon un autre cas particulier, la fonction non linéaire f est la fonction puissance :

$$f(x) = x^7$$

Dans un tel cas particulier, $\delta = 6$ et le calcul de la fonction non linéaire f peut être mise en œuvre avec seulement 4 multiplications.

Selon une variante, la fonction non linéaire f est une fonction de $\{0,1\}^n$ vers $\{0,1\}^n$ qui n'est pas nécessairement bijective.

A titre d'exemple particulier, la fonction non linéaire f est la fonction quadratique $f(x) = x^3$ sur $GF(2^n)$. Dans un tel cas, $\delta = 2$, et la mise en œuvre implique seulement 1 ou 2 multiplications sur $GF(2^n)$.

En variante, la fonction non-linéaire f est une fonction de $\{0,1\}^n$ vers $\{0,1\}^k$ dite courbe, avec $k \leq n/2$.

Par l'expression « courbe », il est entendu une fonction non-linéaire vérifiant :

$\forall a \neq 0, x \rightarrow (f(x) + f(x + a))$ est équidistribuée

Cela signifie que cette fonction à n bit d'entrées et k bits de sortie vérifie :

Pour tout $(a, b) \in GF(2^n)$ $a \neq 0$, $\#\{x, f(x) + f(x + a) = b\} = 2^{n-k}$

Un choix de fonction courbe vectorielle (n,k) avec k maximal égal à n/2 particulièrement simple à mettre en œuvre est la fonction quadratique sur $\{0,1\}^n$ définie sur $GF\left(2^{\frac{n}{2}}\right) \times GF\left(2^{\frac{n}{2}}\right)$ à valeur dans $GF\left(2^{\frac{n}{2}}\right)$ définie par :

$$\forall (x, y) \in GF\left(2^{\frac{n}{2}}\right) \times GF\left(2^{\frac{n}{2}}\right), f(x, y) = x * y$$

où * désigne la multiplication sur $GF(2^{n/2})$.

Dans un tel cas, une seule multiplication dans le sous corps $GF\left(2^{\frac{n}{2}}\right)$ est impliquée.

Selon encore une autre variante, la fonction non-linéaire f est une famille de fonctions comme expliqué dans ce qui suit.

Il est facilement vérifié que la borne de sécurité $\varepsilon$ est conservée pareillement si on prend comme fonction de hachage :

$$H'_\theta(m) = H'_{(\theta_1,\theta_2,f)}(m) = \left[ f\left( \theta_2 + h_{\theta_1}(m) \right) \right] mod\ 2^t$$

avec f une fonction choisie aléatoirement préalablement par Alice et Bob dans un ensemble F de permutations vérifiant la propriété différentielle :

$$\forall\, f\, \in F, \qquad \forall\, (a,b)\, \in GF(2^n)\, a, b \neq 0,\ \#\{x, f(x) + f(x+a) = b\} \leq \delta$$

F peut alors être choisi comme un ensemble de fonctions f affinement équivalentes à une fonction $f_0$ vérifiant la propriété différentielle et toutes facilement calculables avec la multiplication sur le corps fini :

$$F = \left\{ f\,,\ f(x) = f_{\theta_3}(x) = f_0\,(\theta_3 x)\,,\ \theta_3 \in GF(2^n), \theta_3 \neq 0 \right\}$$

On a alors :

$$H'_\theta(m) = H'_{(\boldsymbol{\theta_1},\boldsymbol{\theta_2},\boldsymbol{\theta_3})}(m) = \left[ f_0\big(\theta_3(\theta_2 + h_{\theta_1}(m))\,\big) \right] mod\ 2^t$$

Cette variante légèrement plus compliquée, ne change rien à la résistance à la première forge, mais pourrait être avantageuse pour augmenter la résistance à la deuxième forge et aussi pour afficher une meilleure sécurité « post quantique » en augmentant la taille de la clé utilisée pour l'intégrité (dans l'exemple précédent $\theta = (\theta_1, \theta_2, \theta_3)$ a pour taille 3n bits).

A l'issue de l'étape de mise en œuvre, il est ainsi obtenu une sortie S1.

Lors de l'étape d'obtention, le tag d'intégrité *tag* est calculé à partir de la sortie S1 ainsi qu'à partir de la clé à usage unique r.

Plus précisément, il est calculé le tag d'intégrité tag selon la formule suivante :

$$tag = MSB_t\big(GCTR_K(J0, S1)\big) = MSB_t(r + S1)$$

Par rapport au schéma GMAC, une étape de chiffrage additionnelle est ajoutée. Cela signifie que dans un schéma GMAC, la sortie S1 serait directement égale au résultat du hachage $S_{int}$.

Comme il sera démontré dans la partie démonstration mathématique, le procédé de codage d'un motif d'intégrité cryptographique présentant une taille inférieure ou égale à 64 bits selon la figure 2 garantit une meilleure sécurité.

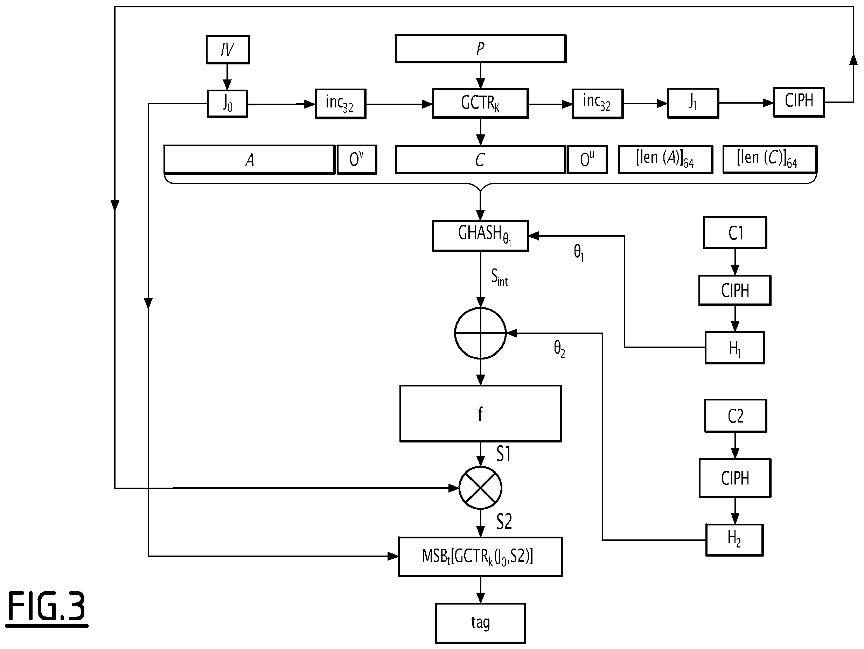

Le fonctionnement du système 10 est maintenant décrit en référence à la figure 3, qui est un ordinogramme d'une mise en œuvre d'un autre exemple de procédé de codage d'un motif d'intégrité.

Les mêmes remarques que pour le procédé de codage d'un motif d'intégrité selon la figure 2 s'appliquant pour le procédé de codage d'un motif d'intégrité selon la figure 3. Seules les différences sont décrites dans ce qui suit.

Dans le cas du procédé de codage d'un motif d'intégrité selon la figure 3, l'étape de chiffrage est modifiée.

L'étape de mise en œuvre comprend le calcul d'une deuxième sous-clé à usage unique r' de n bits définie, par exemple, comme :

$$r' = CIPH(J_1)$$

Où $J_1$ est un deuxième nonce calculé par exemple à partir du premier nonce $J_0$.

Le deuxième nonce $J_1$ est, par exemple, dérivé du premier nonce $J_0$ en incrémentant modulo $2^{32}$ sa partie basse (32 bits) de la quantité len(P)+2.

Il est alors obtenu une deuxième sortie S2 selon la formule suivante :

$$S2 = r' * S1$$

où * désigne la multiplication sur le corps fini GF($2^{n'}$), n' étant la taille des images par la fonction f (n'= n ou n'<= n/2) suivant le choix de la fonction f.

Dans ce cas, le tag d'intégrité *tag* est alors calculé suivant la formule :

$$tag = MSB_t\big(GCTR_K(J_0, S2)\big)$$

Le procédé de codage d'un motif d'intégrité selon la figure 3 présente les mêmes avantages que le procédé de codage d'un motif d'intégrité selon la figure 2.

En outre, comme démontré dans la partie de démonstration mathématique, le procédé de codage d'un motif d'intégrité selon la figure 3 est résistant à la deuxième forge.

Le calcul ajouté est relativement peu coûteux, de sorte que les capacités en calcul peuvent être les mêmes que pour le procédé de codage d'un motif d'intégrité selon la figure 2.

Selon une variante, r' est utilisée dans le calcul du deuxième paramètre $\theta_2$.

Il est également à noter que les présents procédés sont valables pour tout corps fini avec n éléments.

En particulier, selon une variante, dans un scénario souvent connu sous l'appellation « lightweight » qui signifie calculs légers, par exemple pour sécuriser des communications avec des macs de taille pas nécessairement 128 bits, il est particulièrement intéressant d'instancier le procédé qui vient d'être décrit en utilisant un générateur de pseudo aléa lightweight pour générer les pseudo aléa frais de chiffrement du message, produire les aléas frais r(i) et r'(i) de construction du tag d'intégrité et pour dériver les sous-clés fixes ($\theta_1$, $\theta_2$) à partir de la clé secrète K.

Par ailleurs, la taille du corps fini n est réglée entre 32 et 128 au mieux en fonction de l'objectif de sécurité pour la mise en œuvre de la fonction de hachage du message m sous-jacente définie sur le corps fini GF($2^n$) :

$$H_\theta(m) = H_{(\theta_1,\theta_2)}(m) = \left[ f\left( \theta_2 + h_{\theta_1}(m)\right)\right] \bmod 2^t =$$

$$\left[ f\left( \theta_2 + \sum_{i=0}^{l-1} m_i \theta_1^{\,i+1} \right)\right] \bmod 2^t$$

Des différents modes de réalisation, il ressort que la meilleure sécurité est garantie par la combinaison d'une fonction de hachage linéaire suivi d'un traitement non linéaire.

DEMONSTRATIONS MATHEMATIQUES

*INTRODUCTION*

Dans un cas d'usage impliquant des motifs d'intégrité de petite taille (MAC dans la présente démonstration) pour lutter contre le déni de service, l'objectif de sécurité n'est pas dans ce cas l' « intégrité forte » (détection quasi absolue de toute modification des messages) mais vise à garantir simplement une probabilité adhoc en 1 - $2^{-t}$ de détection d'une trame erronée avec t la taille du MAC, que l'altération soit fortuitement produite par le bruit ou choisie par un attaquant actif sur la ligne.

La preuve de sécurité du mode GCM pour l'intégrité borne la probabilité p qu'un attaquant produise une première forge par :

$$p \leq l(m).\,2^{-t}$$

Comme indiqué précédemment, si la taille t du MAC est faible, la probabilité devient trop élevée pour garantir un bon niveau de sécurité au procédé.

Plus grave, un attaquant qui réussit une première forge (ce qui peut être le cas pour une taille de MAC petite), peut alors systématiquement réaliser de nouvelles forges avec la probabilité 1.

Une telle particularité du mode GCM le rend inutilisable pour constituer un motif d'intégrité de petite taille. La particularité provient du choix particulier de la fonction de hachage sous-jacente utilisée par le mode GCM pour calculer le motif d'intégrité. Du fait de la linéarité de la fonction de hachage, si l'attaquant Eve produit une altération sur un message m transmis par Alice et le transforme en un message m* = m xor delta, qui s'avère accepté par le destinataire Bob, alors tout nouveau message m' transmis par Alice et modifié en (m' xor delta) (avec donc le même masque d'erreur « delta ») par Eve, sera accepté par Bob à coup sûr.

On propose ici une modification du mode GCM, appelée procédé de codage d'un motif d'intégrité. Selon la figure 2 qui porte sur le calcul du motif d'intégrité nominalement GMAC et qui devient alors le procédé de codage d'un motif d'intégrité selon la figure 2. Le procédé de codage d'un motif d'intégrité selon la figure 2 rajoute au calcul du haché nominal linéaire du schéma d'intégrité GMAC, un post traitement non linéaire qui permet de renforcer la sécurité de l'intégrité :

Pour une taille de MAC de t bits, cette extension maintient une probabilité de première forge dans la preuve de sécurité de l'ordre de $O(2^{-t})$, indépendamment de la taille du message.

Plus important, elle limite l'impact d'une forge : en cas d'une ou plusieurs forges réussies par l'attaquant, la probabilité pour l'attaquant de réussir une nouvelle forge reste toujours en $O(2^{-t})$.

D'autre part, ce nouveau schéma peut être instancié en pratique avec une fonction simple à mettre en œuvre, à base de la multiplication sur le corps fini $GF(2^n)$ comme c'est le cas pour le mode GCM. Il conserve alors le même niveau de performance/ressource utilisé que le mode GCM nominal.

*CAS DU PROCEDE DE CODAGE D'UN MOTIF D'INTEGRITE SELON LA FIGURE 2*

*Sécurité évaluée dans le cadre de la sécurité inconditionnelle*

Dans cette partie, il s'agit d'apporter une preuve de sécurité du procédé de codage d'un motif d'intégrité selon la figure 2 dans le cadre de la sécurité inconditionnelle.

*Rappel sur le modèle de sécurité inconditionnelle*

Avant d'apporter une telle preuve, il convient de rappeler le modèle de sécurité de l'attaquant sur la ligne en sécurité inconditionnelle. Dans un tel modèle, l'attaquant, souvent appelé Eve, peut interférer sur la ligne de communication entre l'émetteur, souvent appelé Alice, et le destinataire, souvent appelé Bob, de deux manières distinctes.

La première manière est une attaque par imitation (souvent dénommée « impersonation attack » selon la terminologie anglaise). Avec une telle attaque, Eve insère un message ($m^*$, *tag*\*) de son choix. La probabilité que le message soit accepté par Bob est notée $p^{(i)}$.

La deuxième manière est une attaque par substitution (souvent dénommée « substitution attack » selon la terminologie anglaise). Avec une telle attaque, Eve remplace un message intègre ($m$, *tag*) par un autre message de son choix ($m'$, *tag'*). La probabilité que le message ainsi modifié soit accepté par Bob est notée $p^{(s)}$.

Dans le modèle, Eve n'a pas accès aux réponses de la vérification de l'intégrité des messages reçus et traités par le destinataire Bob. Une telle situation est souvent désignée par la formulation Eve est strictement « sur la ligne ».

Par ailleurs, dans le modèle de sécurité, le procédé de calcul du motif d'intégrité est dit $\varepsilon$-*sûr*, si le procédé permet de borner les probabilités $p^{(i)}$ et $p^{(s)}$ par $\varepsilon$.

*Sûreté du procédé de codage d'un motif d'intégrité selon la figure 2*

Ce paragraphe vise à montrer que le procédé de codage d'un motif d'intégrité selon la figure 2 est $\varepsilon$-*sûr* avec :

$$\varepsilon \leq \delta\, 2^{-t} + l(m)\, 2^{-n}$$

La démonstration est effectuée en trois temps.

Dans un <u>premier temps</u>, pour le cas d'une attaque par imitation, il est montré que le procédé de codage d'un motif d'intégrité selon la figure 2 utilisant comme fonction f une fonction de $\{0,1\}^n$ dans $\{0,1\}^k$, $k \leq n$ est $\varepsilon$-sûr, avec

$$\varepsilon \leq \delta\, 2^{k-n-t} + l(m)\, 2^{-n}$$

Pour rappel, le nombre $\delta$ vérifie la propriété suivant du fait du choix de la fonction f :

$$\delta\ est\ tel\ que\ pour\ tout\ (a,b), a \neq 0, \qquad \#\{x, f(x+a) + f(x) = b\} \leq \delta$$

Comme la clé à usage unique r est la réalisation d'une loi uniforme, il est obtenu :

$$\forall (m^*, tag^*)\, p^{(i)} = P_{r,\theta}(H_\theta(m^*) + tag^* = r) = 2^{-t}$$

Il en résulte que la propriété est vérifiée dans le cas de l'attaque par imitation.

Dans un <u>deuxième temps</u>, la même démonstration que pour le premier temps est effectuée pour le cas d'une attaque par imitation.

Dans la solution type Carter Wegman, le tag d'intégrité tag est parfaitement protégé en confidentialité par la clé à usage unique r. En particulier, Eve qui observe les messages intègres transmis entre Alice et Bob, n'apprend rien sur les calculs impliqués dans le calcul des tags d'intégrité de la connaissance de leur valeur, pour tous les messages déjà transmis dans le passé et pour le message courant, même si Eve connait les messages.

Par hypothèse, Eve récupère un message (m, tag) intègre transmis sur la ligne et le remplace par un nouveau message (m', tag').

Il est introduit deux écarts.

Le premier écart $D$ est l'écart bit à bit entre m et m'. Le premier écart $D$ est calculé comme $D = m + m'$. Le premier écart $D$ est considéré comme un polynôme à coefficient sur $GF(2^n)$.

Le deuxième écart d est l'écart bit à bit entre *tag* et *tag'*. Le deuxième écart *d* est calculé comme *d = tag + tag'* $\in \{0,1\}^t$.

Il est à noter que le premier écart $D$ est nécessairement différent de 0 alors que le deuxième écart $d$ peut être nul.

Il est, en outre, rappelé que les variables $\theta_1$, $\theta_2$ et $r$ sont des variables aléatoires indépendantes de loi uniforme respectivement sur $GF(2^n)$, $F(2^n)$, et $\{0,1\}^t$.

Il vient alors pour le calcul de la probabilité que le message d'Eve (m', tag') soit considéré comme valable par Bob :

$$
\begin{aligned}
p^{(s)} &= P_{r,\theta_1,\theta_2}\{\, tag' + r = [\, f(\theta_1 m'(\theta_1) + \theta_2)\,]\, mod\ 2^t \,\} \\
&= P_{\theta_1,\theta_2}\{\, tag + d = [\, f(\theta_1 m(\theta_1) + \theta_1 D(\theta_1) + \theta_2)\,]\, mod\ 2^t \,\} \\
&= P_{\theta_1,\theta_2}\{\, d = [\, f(\theta_1 m(\theta_1) + \theta_2) + f(\theta_1 m(\theta_1) + \theta_2 + \theta_1 D(\theta_1))\,]\ mod\ 2^t \,\} \\
&= P_{\theta_1,\theta_2}\{\, d = [f(\theta_2) + f(\theta_2 + \theta_1 D(\theta_1))]\, mod\ 2^t \,\} \\
&= \sum_{a\,\in\{0,1\}^{k-t}} P_{\theta_1,\theta_2}\{\, (d,a) = f(\theta_2) + f(\theta_2 + \theta_1 D(\theta_1))\,\}
\end{aligned}
$$

La notation $P_{r,\theta_1,\theta_2}(x)$ signifie que l'on calcule la probabilité d'un événement « x » faisant intervenir les variables aléatoires $r$, $\theta_1$, $\theta_2$. Pour plus de clarté, on met en général en gras les variables aléatoires. $D(\theta_1)$ est la valeur du polynôme D(x) pris au point $\theta_1$.

Il convient alors de distinguer deux cas selon la valeur du deuxième écart $d$.

Selon le premier cas, il est supposé que le deuxième écart $d$ est nul. Il vient alors :

$$p^{(s)} = \sum_{a \in \{0,1\}^{k-t}, \Delta \in \{0,1\}^n} P_{\theta_1}\{ \boldsymbol{\theta_1}D(\boldsymbol{\theta_1}) = \Delta \} \, P_{\theta_2}\{ f(\boldsymbol{\theta_2}) + f(\boldsymbol{\theta_2} + \Delta) = (0, a) \}$$

$$= \sum_{a \in \{0,1\}^{k-t}, a \neq 0} \sum_{\Delta \in \{0,1\}^n, \Delta \neq 0} P_{\theta_1}\{ \boldsymbol{\theta_1}D(\boldsymbol{\theta_1}) = \Delta \} P_{\theta_2}\{ f(\boldsymbol{\theta_2}) + f(\boldsymbol{\theta_2} + \Delta) = (0, a) \}$$

$$+ P_{\theta_1}\{ \boldsymbol{\theta_1}D(\boldsymbol{\theta_1}) = 0 \}$$

$$\leq \delta \, 2^{-n} \left( \sum_{a \in \{0,1\}^{k-t}, a \neq 0} \sum_{\Delta \in \{0,1\}^n, \Delta \neq 0} P_{\theta_1}\{ \boldsymbol{\theta_1}D(\boldsymbol{\theta_1}) = \Delta \} \right) + P_{\theta_1}\{ \boldsymbol{\theta_1}D(\boldsymbol{\theta_1}) = 0 \}$$

$$= \delta \, 2^{-n} \left( \sum_{a \in \{0,1\}^{k-t}, a \neq 0} (1 - P_{\theta_1}\{ \boldsymbol{\theta_1}D(\boldsymbol{\theta_1}) = 0 \}) \right) + P_{\theta_1}\{ \boldsymbol{\theta_1}D(\boldsymbol{\theta_1}) = 0 \}$$

$$\leq \delta \, 2^{-n} \left( \sum_{a \in \{0,1\}^{k-t}, a \neq 0} (1) \right) + P_{\theta_1}\{ \boldsymbol{\theta_1}D(\boldsymbol{\theta_1}) = 0 \}$$

$$= \delta \, 2^{-n} \left( 2^{k-t} - 1 \right) + P_{\theta_1}\{ \boldsymbol{\theta_1}D(\boldsymbol{\theta_1}) = 0 \}$$

$$= \delta \, 2^{-n} \left( 2^{k-t} \right) + P_{\theta_1}\{ \boldsymbol{\theta_1}D(\boldsymbol{\theta_1}) = 0 \}$$

Et puisque qu'un polynôme de degré w sur le corps fini GF($2^n$) ne peut avoir plus de w racines, on obtient alors

$$p^{(s)} \leq \delta \, 2^{(k-n)-t} + (\deg(D) + 1) \, 2^{-n}$$

Selon le deuxième cas, il est supposé que le deuxième écart d est non nul, ce qui implique une modification du tag par Eve. Il vient alors :

$$p^{(s)} = \sum_{a \in \{0,1\}^{k-t}} \sum_{\Delta \in \{0,1\}^n} P_{\theta_1}\{ \boldsymbol{\theta_1}D(\boldsymbol{\theta_1}) = \Delta \} \, P_{\theta_2}\{ f(\boldsymbol{\theta_2}) + f(\boldsymbol{\theta_2} + \Delta) = (d, a) \}$$

$$= \sum_{a \in \{0,1\}^{k-t}} \sum_{\Delta \in \{0,1\}^n, \Delta \neq 0} P_{\theta_1}\{ \boldsymbol{\theta_1}D(\boldsymbol{\theta_1}) = \Delta \} P_{\theta_2}\{ f(\boldsymbol{\theta_2}) + f(\boldsymbol{\theta_2} + \Delta) = (d, a) \}$$

$$\leq \delta \, 2^{k-n-t} \left( \sum_{a \in \{0,1\}^{k-t}} \sum_{\Delta \in \{0,1\}^n, \Delta \neq 0} P_{\theta_1}\{ \boldsymbol{\theta_1}D(\boldsymbol{\theta_1}) = \Delta \} \right)$$

$$\leq \delta \, 2^{k-n-t} \sum_{\Delta \in \{0,1\}^n, \Delta \neq 0} P_{\theta_1}\{ \boldsymbol{\theta_1}D(\boldsymbol{\theta_1}) = \Delta \} )$$

$$\leq \delta \, 2^{k-n-t} \left( 1 - P_{\theta_1}\{ \boldsymbol{\theta_1}D(\boldsymbol{\theta_1}) = 0 \} \right)$$

$$\leq \delta \, 2^{k-n-t}$$

Dans chacun des cas, on a donc :

$$p^{(s)} \leq \delta \, 2^{k-n-t} + (\deg(D) + 1) \, 2^{-n}$$

Comme deg(D) + 1 ≤ l(m), il est obtenu :

$$p^{(s)} \le \delta\, 2^{k-n-t} + l(m)\, 2^{-n}$$

Dans les deux cas, l'inégalité à démontrer est vérifiée, à savoir que le procédé de codage d'un motif d'intégrité selon la figure 2 utilisant comme fonction f une fonction de $\{0,1\}^n$ dans $\{0,1\}^k$, k ≤ n est ε-sûr, avec

$$\varepsilon \le \delta\, 2^{k-n-t} + l(m)\, 2^{-n}$$

Dans un <u>troisième temps</u>, il est montré que le procédé de codage d'un motif d'intégrité selon la figure 2 instanciée avec une fonction vectorielle courbe f, de $\{0,1\}^n$ dans $\{0,1\}^k$, k ≤ n/2 est ε-sûr, avec :

$$\varepsilon \le 2^{-t} + l(m)\, 2^{-n}$$

Il convient de rappeler que, lorsque la fonction f est une fonction vectorielle de $\{0,1\}^n$ dans $\{0,1\}^k$, la fonction f est courbe ce qui implique que :

$\forall\, a \ne 0$, $x \to (f(x) + f(x + a))$ est équidistribuée

Cela implique que #$\{x, f(x) + f(x + a) = b\} = 2^{n-k}$

Par ailleurs, une fonction f courbe implique que k est inférieure ou égale à n/2.

Il est alors possible d'utiliser la démonstration précédente pour $\delta = 2^{n-k}$, ce qui démontre la propriété.

Il résulte de cette propriété que, pour n suffisamment grand comme c'est le cas pour n = 128, le terme $l(m)\, 2^{-n}$ est concrètement toujours négligeable.

Par ailleurs, on sait choisir des fonctions f produisant des valeurs $\delta$ petite, notamment avec $1 \le \delta \le 6$.

Reste alors le terme $\delta\, 2^{-t}$ qui est bien un $O(2^{-t})$, indépendant de la taille du message.

Pour rappel, en utilisant un procédé GMAC, le schéma d'intégrité est *ε-sûr, avec* $\varepsilon \le l(m)\, 2^{-t}$.

Comme $l(m)$ est bien plus grand que $\delta$, le procédé de codage du motif d'intégrité selon la figure 2 présente une meilleure sécurité que le procédé GMAC.

*Sécurité évaluée dans un cadre plus sévère*

La sécurité inconditionnelle classique ne considère que le modèle de l'attaquant Eve strictement sur la ligne entre Alice et Bob et ne prévoit pas qu'Eve puisse aussi exploiter les réponses de la vérification de l'intégrité au niveau du récepteur des messages.

De son côté, la sécurité prouvable classique autorise bien l'attaquant à accéder à l'oracle de vérification d'intégrité, mais ne s'intéresse qu'à la probabilité de succès d'une première forge.

Dans les deux cas, l'analyse de sécurité n'est alors pas appropriée pour maîtriser la capacité d'un attaquant à réussir de nouvelles forges sachant que celui-ci a obtenu déjà des forges et/ou qu'il accède en continu aux réponses du vérifieur

Pour le cas du protocole GMAC, comme nous l'avons déjà souligné en introduction, le choix particulier de la fonction de hachage $h_{\theta_1}(m)$ majore la probabilité de première forge par $2^{-t}(l(m))$. En revanche, si l'attaquant connait déjà une forge, en raison de la linéarité de $h_{\theta_1}(m)$, l'attaquant sait alors modifier systématiquement les messages transmis et les faire accepter par le récepteur à coup sûr.

Pour le procédé de codage d'un motif d'intégrité selon la figure 2, l'emploi de la fonction non linéaire f évite a priori cette attaque triviale (le masque d'erreur sur le message m qui a fonctionné pour la première forge constatée par l'attaquant, ne fonctionne plus automatiquement pour forger un autre message m').

Vérifions plus précisément quelle information supplémentaire l'attaquant peut obtenir des réponses du vérifieur dans le cas du procédé de codage d'un motif d'intégrité selon la figure 2.

Quand Eve observe un message intègre m sur la ligne sans le modifier et qu'elle constate qu'il est validé par le vérifieur, Eve n'apprend rien de nouveau.

A contrario, si Eve a modifié un message (m,tag) en (m',tag') et qu'elle connaît la réponse du vérifieur, Eve apprend une relation vérifiée par les deux paramètres $\theta_1$ et $\theta_2$.

Avec les notations précédentes, il est obtenu la relation (1) suivante :

$$d = (resp \ne)[\, f(\theta_1 m(\theta_1) + \theta_2) + f(\theta_1 m(\theta_1) + \theta_2 + \theta_1 D(\theta_1))\,]\; mod\; 2^t$$

Puisque l'attaquant est supposé maitriser les écarts D et d, et dans un cadre où le message m est en fait connu de l'attaquant, la relation 1 apporte potentiellement jusqu'à t bits d'information sur les deux paramètres $\theta_1$ et $\theta_2$. Dans le schéma simple où seul l'aléa frais r(i) est utilisé pour chaque nouveau message m(i), la résistance à la seconde forge ne pourra pas malheureusement être strictement « inconditionnelle» comme c'est le cas pour la résistance à la première forge.

En pratique, dans un modèle de sécurité affaiblie où l'attaquant ne peut pas choisir les messages et où chaque message m(i) transmis sur la ligne comporte au moins t bits d'entropie pour l'attaquant, on peut considérer que la connaissance acquise par l'attaquant par ce type de relation où le message m(i) en clair intervient, est concrètement négligeable.

Quoi qu'il en soit, la fuite d'information ne garantit plus la borne de sécurité du schéma puisque les deux paramètres $\theta_1$ et $\theta_2$ ne peuvent plus être considérés comme une variable aléatoire uniforme pour l'attaquant, comme c'est le cas dans la preuve pour borner la probabilité de succès d'une forge.

*CAS DU PROCEDE DE CODAGE D'UN MOTIF D'INTEGRITE SELON LA FIGURE 3*

Le procédé de codage d'un motif d'intégrité selon la figure 3 utilise un aléa complémentaire r'(i) d'au moins t bits d'entropie à chaque message traité m(i), en complément de la clé à usage unique r(i) de t bits. Cet aléa complémentaire est incorporé dans la fonction non linéaire f de manière à masquer la relation (1) sur la clé fixe ($\theta_1$, $\theta_2$) tout en maintenant la propriété différentielle de f qui permet de borner la probabilité de succès d'une première forge, sous l'hypothèse où l'attaquant n'a aucune information sur ($\theta_1$, $\theta_2$).

Ainsi renforcée, le schéma du procédé de codage d'un motif d'intégrité selon la figure 3 devient résistant de manière inconditionnelle à la forge indépendamment des réponses d'acceptation par le destinataire que l'attaquant observe.

Par ailleurs, dans ce cas encore, il est possible de montrer que, dans le cadre de la sécurité « inconditionnelle renforcée » (ie l'attaquant a aussi accès aux réponses du vérifieur), le schéma d'intégrité du procédé de codage d'un motif d'intégrité selon la figure 3 est $\varepsilon$-sûr, avec

$$\varepsilon \leq \delta\, 2^{-t} + l(m)\, 2^{-n}$$

LEXIQUE

- AES : algorithme de chiffrement symétrique, l'abréviation AES renvoyant à la dénomination « Advanced Encryption Standard » signifiant littéralement « norme de chiffrement avancé ».

- CIPH : l'opération de chiffrement élémentaire d'un bloc de n bits par le calcul par bloc ou le générateur de pseudo aléa utilisé par le mécanisme.

- $GCTR_K(r, m)$ : l'opération de chiffrement d'un message m en utilisant la clé K, et l'IV r.

- $GHASH_H$ : la fonction de hachage linéaire utilisée par le mode GCM standard, paramétrée par la clé dérivée H.

- $inc_{32}(x)$ : opération qui incrémente de 1 les 32 bits de poids faible d'un nombre x et qui garde intacte les bits de poids fort au-delà de la position 32.

- *len* : fonction qui donne la longueur en mots de 128 bits d'un message.

- $[len(A)]_{64}$ : valeur (codée sur un mot de 64 bits) de la taille en mot de 128 bits d'une séquence de bits A.

- $l(m)$ : longueur du message m en mot de 128 bits.

- $MSB_t$ : fonction qui donne les t bit de poids fort d'un motif de n bits.

- n : la taille en bit du calcul par bloc utilisé (ici dans le procédé décrit et lié au fait que l'AES est utilisé, n = 128),

- $0^x$ : un motif constitué de x bit à 0.

- [a] *mod* $2^t$ : les t bits de poids faible d'un motif a.

- + : suivant le contexte, désigne l'addition sur les réels, ou bien la loi d'addition sur un corps fini $GF(2^n)$, c'est-à-dire le xor bit à bit.

- II : l'opération de concaténation de chaînes binaires.

- #E : le cardinal de l'ensemble E.

**Revendications**

1. Procédé de codage d'un motif d'intégrité cryptographique de taille inférieure ou égale à 64 bits, le procédé de codage comprenant une étape de :

   - fourniture d'une première constante (C1), d'une deuxième constante (C2) distincte de la première constante (C1) et d'un message,
   - chiffrement de la première constante (C1) à l'aide d'une première clé de chiffrement (CIPH), pour obtenir un premier paramètre ($\theta_1$),
   - application d'une fonction de hachage paramétrée par le premier paramètre ($\theta_1$) sur une donnée obtenue à partir du message, la fonction de hachage étant une fonction dans un corps fini, pour obtenir un résultat du hachage ($S_{int}$),
   - chiffrement de la deuxième constante (C2) à l'aide d'une deuxième clé de chiffrement (CIPH), pour obtenir un deuxième paramètre ($\theta_2$),
   - mise en œuvre d'un traitement non linéaire comportant l'application d'une fonction non-linéaire f sur le deuxième paramètre ($\theta_2$) et le résultat du hachage ($S_{int}$), pour obtenir une sortie (S1), et
   - obtention du motif d'intégrité cryptographique (tag) en fonction du résultat de la sortie (S1).

2. Procédé de codage selon la revendication 1, dans lequel le corps fini est un corps de Galois à $2^n$ membres avec n un entier supérieur ou égal à 6.

3. Procédé de codage selon la revendication 2, dans lequel la fonction non-linéaire f vérifie :
   pour tout (a, b) $\in GF(2^n)$ a, b $\neq$ 0, #{x, f(x) + f(x + a) = b} $\leq \delta$
   avec # désignant le cardinal, $GF(2^n)$ le corps de Galois à $2^n$ membres et $\delta$ un nombre.

4. Procédé de codage selon la revendication 3, dans lequel le nombre $\delta$ est inférieur ou égal à 6.

5. Procédé de codage selon l'une quelconque des revendications 1 à 4, dans lequel l'étape de mise en œuvre comporte la multiplication du résultat de la fonction non-linéaire f par un nombre aléatoire (r').

6. Procédé de codage selon l'une quelconque des revendications 1 à 5, dans lequel la fonction non-linéaire f est une permutation puissance sur le corps fini.

7. Procédé de codage selon la revendication 6, dans lequel la fonction non-linéaire f est la fonction inverse ou la fonction qui à x associe $x^7$.

8. Procédé de codage selon l'une quelconque des revendications 1 à 5, dans lequel la fonction non-linéaire f est une fonction vectorielle courbe.

9. Procédé de codage selon l'une quelconque des revendications 1 à 8, dans lequel à l'étape d'obtention, il est appliqué une fonction ($MSB_t$) impliquant une troncature, la fonction ($MSB_t$) étant appliquée sur la sortie (S1) et une clé à usage unique ($J_0$).

10. Produit programme d'ordinateur comportant un support lisible d'informations, sur lequel est mémorisé un programme d'ordinateur comprenant des instructions de programme, le programme d'ordinateur étant chargeable sur une unité de traitement de données (20) et adapté pour entraîner la mise en œuvre d'étapes d'un procédé selon l'une quelconque des revendications 1 à 9 lorsque le programme d'ordinateur est mis en œuvre sur l'unité de traitement des données (20).

11. Support lisible d'informations comportant des instructions de programme formant un programme d'ordinateur, le programme d'ordinateur étant chargeable sur une unité de traitement de données (20) et adapté pour entraîner la mise en œuvre d'étapes d'un procédé selon l'une quelconque des revendications 1 à 9 lorsque le programme d'ordinateur est mis en œuvre sur l'unité de traitement de données (20).

**FIG.1**

FIG.2

**FIG.3**

Europäisches
Patentamt

European
Patent Office

Office européen
des brevets

**RAPPORT DE RECHERCHE EUROPEENNE**

Numéro de la demande

EP 20 21 7196

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Kaisa Nyberg ET AL: "Galois MAC with forgery probability close to ideal", , 29 juin 2005 (2005-06-29), XP055736275, Extrait de l'Internet: URL:https://csrc.nist.gov/csrc/media/projects/block-cipher-techniques/documents/bcm/comments/general-comments/papers/nyberg_gilbert_and_robshaw.pdf [extrait le 2020-10-02] * sections 1 à 3 * | 1-11 | INV. H04L9/32 |
| X | Antoine Joux: "Authentication Failures in NIST version of GCM", , 1 janvier 2006 (2006-01-01), XP055736281, Extrait de l'Internet: URL:https://csrc.nist.gov/csrc/media/projects/block-cipher-techniques/documents/bcm/comments/800-38-series-drafts/gcm/joux_comments.pdf [extrait le 2020-10-02] * section 5 * | 1-11 | |
| X | KAZUMARO AOKI ET AL: "The Security and Performance of GCM when Short Multiplications Are Used Instead", 28 novembre 2012 (2012-11-28), INFORMATION SECURITY AND CRYPTOLOGY, SPRINGER BERLIN HEIDELBERG, BERLIN, HEIDELBERG, PAGE(S) 225 - 245, XP047028051, ISBN: 978-3-642-38518-6 * figure 2 * | 1-11 | |

DOMAINES TECHNIQUES RECHERCHES (IPC)

H04L

-/--

Le présent rapport a été établi pour toutes les revendications

| Lieu de la recherche | Date d'achèvement de la recherche | Examinateur |
|---|---|---|
| Munich | 25 janvier 2021 | Billet, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&: membre de la même famille, document correspondant

EPO FORM 1503 03.82 (P04C02)

page 1 de 2

Europäisches
Patentamt

European
Patent Office

Office européen
des brevets

## RAPPORT DE RECHERCHE EUROPEENNE

Numéro de la demande

EP 20 21 7196

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Niels Ferguson: "Authentication weaknesses in GCM", , 20 mai 2005 (2005-05-20), XP055736274, Extrait de l'Internet: URL:https://csrc.nist.gov/CSRC/media/Projects/Block-Cipher-Techniques/documents/BCM/Comments/CWC-GCM/Ferguson2.pdf [extrait le 2020-10-02] * section 7 * ----- | 1-11 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Munich | 25 janvier 2021 | Billet, Olivier |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
...........................................................................
& : membre de la même famille, document correspondant

EPO FORM 1503 03.82 (P04C02)